(19) Europäisches Patentamt
European Patent Office
Office européen des brevets

(11) **EP 3 753 773 A1**

(12) **EUROPEAN PATENT APPLICATION**

(43) Date of publication:
**23.12.2020 Bulletin 2020/52**

(51) Int Cl.:
***B60K 7/00*** *(2006.01)*

(21) Application number: **19194072.5**

(22) Date of filing: **28.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2019 US 201916444822**

(71) Applicant: **Hyster-Yale Group, Inc.
Fairview, OR 97024 (US)**

(72) Inventors:
• **WHITE, Andrew
Fairview, OR 97024 (US)**
• **STENT, Mark
Fairview, OR 97024 (US)**
• **COLE, Malcolm
Fairview, OR 97024 (US)**

(74) Representative: **Mader, Joachim
Bardehle Pagenberg Partnerschaft mbB
Patentanwälte, Rechtsanwälte
Prinzregentenplatz 7
81675 München (DE)**

(54) **GEAR DRIVE AND DRIVE WHEEL CONFIGURATION FOR ZERO TORQUE STEER**

(57) Apparatuses and systems that yield a zero torque steer for a pallet truck or similar vehicle are disclosed. In an embodiment, a motor is attached to a final drive. The final drive is equipped to a steer assembly such as a tiller that includes a drive wheel that is offset from the steering axis. The offset is determined on the basis of the drive wheel radius, divided by the ratio of the final drive. The ratio of the final drive is determined by selection of the sizes of a first and second gear. In embodiments, the first and second gears provide a right angle drive. The drive wheel creates a torque due to the offset that counteracts torque imposed by operation of the drive motor. Other embodiments may be described and/or claimed.

FIG. 1A

100

110

FIG. 1B

## Description

### Technical Field

Disclosed embodiments are directed to drive systems for vehicles. Specifically, drive systems that counteract torque steer induced by a drive motor and that may be equipped to materials handling equipment such as a pallet truck are disclosed.

### Background

Motorized vehicles, such as materials handling equipment like a pallet truck, include a motor or other form of propulsion power to allow heavy loads of palletized or otherwise packaged goods and/or materials to be moved about an area with relative ease. Absent powered propulsion, the materials would have to be manually pushed or pulled, typically at a speed slower than the average walking speed of a person. Further, ascending ramps or other inclines using only unpowered equipment would only be possible with a sufficiently light load. Larger pallet trucks or other such materials handling equipment capable of accepting and manipulating heavy loads are often beneficial to improve efficiency; however, for at least the foregoing reasons such equipment typically requires some form of power. In some use scenarios, the materials and/or goods to be moved may be too heavy to feasibly move without powered equipment. When moving materials and/or goods about a relatively large area, such as a warehouse or stockyard, powered equipment such as a pallet truck is desirable to maximize efficiency.

The background description provided herein is for the purpose of generally presenting the context of the disclosure. Unless otherwise indicated herein, the materials described in this section are not prior art to the claims in this application and are not admitted to be prior art by inclusion in this section.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

Figs. 1A and 1B are perspective views that illustrate an example drive configuration for a pallet truck that minimizes or eliminates torque steer, according to various embodiments.
Fig. 2 is a cutaway view depicting an example arrangement of drive components that may be useable with the example drive configuration of Figs. 1A and 1B, according to various embodiments.
Fig. 3 is an example pallet truck equipped with a drive configuration similar to the configuration depicted in Figs. 1A and 1B, according to various embodiments.
Fig. 4 is a perspective view of a drive configuration according to the current state of the art.
Fig. 5 is a flow chart of a method for providing a final gear drive and drive wheel arrangement for zero torque steer, according to various embodiments.

### Detailed Description

In the following detailed description, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Aspects of the disclosure are disclosed in the accompanying description. Alternate embodiments of the present disclosure and their equivalents may be devised without parting from the spirit or scope of the present disclosure. It should be noted that like elements disclosed below are indicated by like reference numbers in the drawings.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

A basic law of physics is that for any action, there is an equal and opposite reaction. In the case of rotating masses, such as the rotor of a motor, this law dictates that the act of propelling the rotor to rotate also induces a rotation in the motor's stator and housing that is equal in force to the torque applied to the rotor, but opposite in rotational direction. Absent a stationary mounting, the motor housing would rotate around the rotor even as the rotor rotates to drive the load. Thus, when a motor produces torque to drive a coupled load, the motor also exerts an approximately equal amount of torque through its body, which is conveyed to any structure to which the motor is mounted. This principle holds true regardless of the type of motor, e.g. electric, hydraulic, pneumatic, liquid fueled, etc.

Depending upon a vehicle's intended usage, a vehicle may have its propulsion motor secured or otherwise coupled to a steering mechanism. For example, a pallet truck for materials handling may be steered by use of a tiller to which both a drive wheel and propulsion motor are attached. The tiller, as may be seen in the various figures, typically comprises an extension that rises vertically from the pallet truck. Twisting the tiller left or right in turn swivels the drive wheel, causing the pallet truck to be driven in the desired direction. The propulsion motor drives the wheel by imparting torque through a geared drivetrain. As the propulsion motor imparts torque to the drive wheel, the motor housing imparts an approximately equal torque, but counter to the motor's rotational direction, to its mounting points.

Because the propulsion motor is secured to the vehicle's tiller, this torque is imparted through the motor housing, which in turn is imparted to the vehicle tiller. This torque may be felt by the operator as a twisting motion in the tiller, the direction of which depends upon the direction of motor rotation. In implementations where forward or reverse vehicle travel is effected by reversing the motor direction, the tiller will twist one direction in forward motion, and the opposite direction in reverse motion. This torque may be most prominently felt when the pallet truck is initially started, where the drive motor is generating maximum torque to start the pallet truck moving, and, to a lesser extent, when the vehicle is throttled or slowed. This motion imparted to the tiller may result in the pallet truck being inadvertently steered in an uncommanded direction.

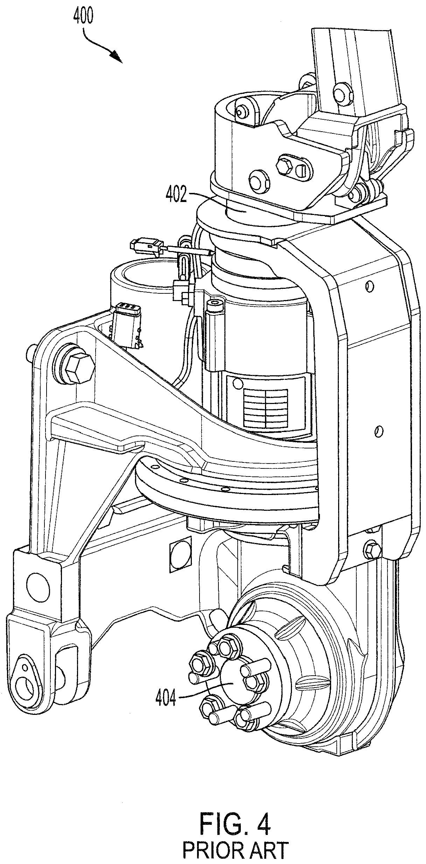

This problem can be seen in Fig. 4, which depicts a typical arrangement 400 of drive motor, tiller, and drive wheel that may be found on a pallet truck as currently known in the art. The tiller and drive motor attach to a pivot point 402, that defines a steer axis that runs vertically along the axis of the motor and through the pivot point. As can be seen, a hub 404 for a drive wheel attaches below and is coupled to the drive motor through a gear drive. The hub 404, attached to the gear drive output, is positioned so that a drive wheel secured to the hub 404 presents a plane that includes the steer axis. Rotating the tiller about the steer axis causes the plane of the hub and secured drive wheel to also rotate about the steer axis. In this configuration, the drive wheel, by contact with the ground, imparts a drive force that is in line with the steer axis, and so does not impart a torque back to the steer axis. However, the motor, directly secured to the tiller and in line with the steer axis, imparts a torque opposite to its rotation to the tiller. Unless mitigated or neutralized, this torque can be experienced by an operator as a tendency for the tiller to pivot in the direction of the imparted torque. As the tiller is coupled to the drive wheel, this tendency to pivot translates to an uncommanded steer in the direction of the pivot, also known as torque steer. If the operator is unfamiliar with the handling characteristics of such a drive system or is otherwise not expecting the torque steer, the pallet truck may be steered off course.

There are various known techniques for counteracting, eliminating, or otherwise reducing torque steer. These techniques typically require the use of relatively complex mechanisms that generate a counteracting torque, absorb the torque, and/or decouple torque generated by the motor from the tiller or other steering mechanism. However, these techniques may also require complex mechanisms, often with numerous moving parts, that present various disadvantages, such as increased cost, increased chance of mechanical failure, increased bulk, increased wear, increased maintenance requirements, low tolerance to dirty environments, etc.

Disclosed embodiments provide a configuration of drive motor and drive wheel that minimizes, or eliminates, torque steer with a relatively simple arrangement, thus allowing a final drive with a low parts count. By offsetting the drive wheel from the steer axis, the drive wheel can generate a torque that is transmitted to the tiller via the lever arm created from the offset. By carefully selecting the amount of offset, the drive wheel can generate a torque that approximately equals the torque imparted by the motor but in the opposite direction. The resulting forces can substantially cancel each other, resulting in no tendency to torque steer. The low parts count may offer advantages over other solutions that require more complex mechanisms, such as a greater reliability, reduced maintenance, greater tolerance to dirty environments, etc.

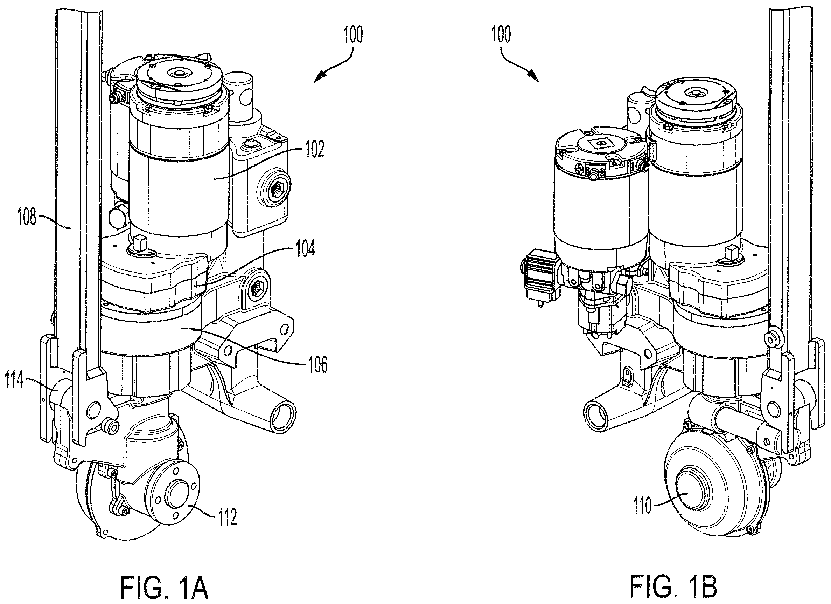

Figs. 1A and 1B illustrate both sides of a drive arrangement or system 100 that presents no tendency to torque steer. System 100 may be equipped to a vehicle, such as a pallet truck. System 100 includes a drive motor 102, which is coupled to a reduction gear box 104. The assembly of drive motor 102 and reduction gear box 104 mount to a pivot point 106, which defines a vertical steer axis. Attached to the assembly and pivot point 106 is a tiller 108, by which an operator can pivot the assembly and associated drive wheel for directing the path of a vehicle to which the system 100 is equipped. System 100 further is coupled to a final drive 110, which itself is coupled to a wheel hub 112. Also depicted in Figs. 1A and 1B is tiller pivot 114, which allows tiller 108 to pivot down and away towards a position that is more parallel to the ground, and further away from the steer axis. Tiller pivot 114 thus allows an operator to vary the amount of leverage exerted on the drive system, to fine tune control of the vehicle. As will be understood, tiller 108 is used to pivot system 100 about the steering axis defined by pivot point 106. This rotation in turn causes a drive wheel attached to wheel hub 112 to rotate about the steering axis, thus allowing a vehicle equipped with system 100 to be guided down a desired travel path.

Motor 102 may be any motor with sufficient power to drive a vehicle to which system 100 is equipped. In some embodiments, motor 102 may be an electric motor. In other embodiments, motor 102 may be another type of motor suitable for a given implementation, e.g. hydraulic, pneumatic, liquid fueled, gas fueled, or another type that can provide sufficient torque. In still other embodiments, motor 102 may be some form of hybrid drive, or may comprise multiple power units. Motor 102, as will be understood, typically will output rotational force in embodiments. Some implementations may utilize a motor 102 that supplies linear force or force of another suitable type. Motor 102 may receive power from a source remotely mounted on the vehicle, e.g. a battery pack, hydraulic pump, pneumatic pump or reservoir, or another power source appropriate to the type of motor 102 being employed. In other embodiments, motor 102 may include its own power source.

Gear box 104, to which motor 102 is coupled, serves to alter the power output from motor 102. In some embodiments, motor 102 may provide power at a high rotational speed, but with low torque. Depending on the requirements of a given implementation, gear box 104 may be employed to convert a high rotational speed input to a low rotational speed output, but at a high torque. Alternatively, gear box 104 could do the reverse, namely, convert a high torque but low rotational speed from motor 102 to a higher rotational speed, at the expense of torque. Gear box 104 could also serve to alter the direction of power supplied by motor 102, as may be required by a given embodiment. Gear box 104 may be of any suitable type and configuration to effect the conversion of mechanical power required by a given embodiment. Factors informing the selection of a gear box can include, e.g., the output speed and torque of motor 102, and the torque and rotational speed required by the drive train of a given embodiment. Some examples of gear box 104 may include one or more intermeshed gears providing an appropriate ratio of input turns to output turns. The intermeshed gears may be of any suitable type, e.g. hypoid, bevel, spiral cut, worm drive, helical cut, etc. The gear box 104 may be sealed or open. Some embodiments of system 100 may omit gear box 104, such as where motor 102 outputs power at a speed and torque level suitable for the drive train of system 100. Other embodiments may integrate a gear box 104 as part of motor 102 (such as a reduction drive), where the output of motor 102 via its integrated gear box 104 outputs power at a speed and torque level suitable for the drive train of system 100.

As seen in Figs. 1A and 1B, motor 102 and associated gear box 104 couple to the steering mechanism and tiller at a pivot point 106. Pivot point 106 may comprise one or more radial bearings, possibly in combination with one or more thrust bearings, and may be grease filled. Pivot point 106 thus secures the motor 102 and associated gear box 104 to the implementing vehicle, and serves as the load bearing point at which power supplied by motor 102 through a drive wheel is transferred to the implementing vehicle frame for motion. The point at which system 100 rotates in pivot point 106 defines a vertical steering axis, as will be discussed further herein. This steering axis, as the center point of pivot point 106, also serves as a fulcrum point for generation of torque by a drive wheel, as will be discussed further below. Any torque imposed by operation of motor 102 is transmitted to the tiller 108 via rotation around pivot point 106. Pivot point 106, as may be understood, is essentially a hollow ring, through which passes a shaft to transfer power from motor 102 and gear box 104, which are disposed above pivot point 106, to the final drive 110, located below pivot point 106.

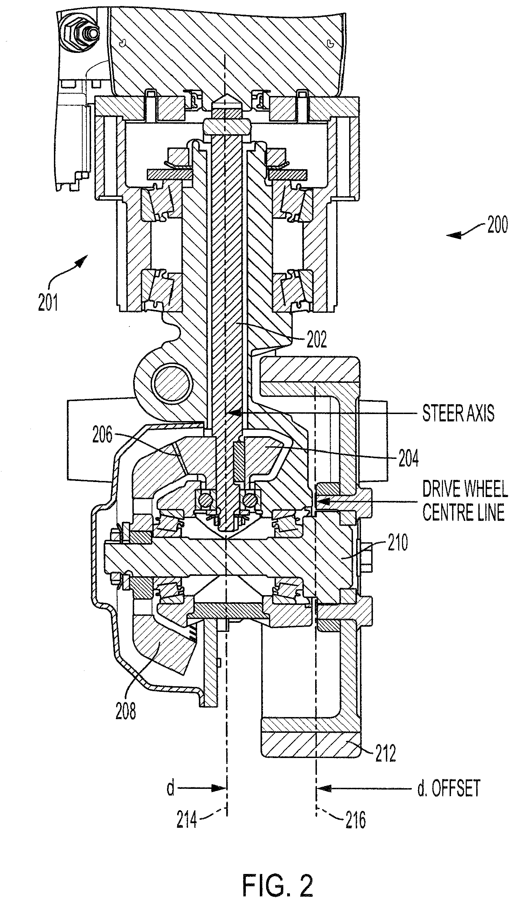

Motor 102 and gear box 104 are coupled, in the depicted embodiment, through pivot point 106, to final drive 110. Final drive 110, in embodiments, may act to both convert the direction of power from parallel to the steering axis to perpendicular, appropriate to power a drive wheel, and also may serve as a final conversion of rotational speed to or from torque, such as where final drive 110 is comprised of gears that provide a drive ratio other than 1:1. The components of an example final drive will be discussed below with respect to Fig. 2. As depicted in Figs. 1A and 1B, final drive 110 is sealed, with the constituent gears enclosed in a housing, and may be bathed in a suitable lubricant such as gear oil or grease. In other embodiments, final drive 110 may be comprised of one or more open gears, such as where equipped to a vehicle that is not expected to be used in environments that may foul the gears or cause undue wear. As will be discussed below, final drive 110 may comprise a pair of intermeshed bevel gears. Other embodiments may employ different types of gears, e.g. hypoid, worm, helical, etc.

The output of final drive 110, in the depicted embodiment, is coupled to a wheel hub 112, to which is mounted a drive wheel (depicted in subsequent figures). The wheel hub 112 terminates an output shaft coming from final drive 110. The output shaft, in embodiments, is of a length suitable to offset wheel hub 112 from the steering axis, to provide the necessary lever arm to achieve a torque from an attached drive wheel that offsets the torque imposed by operation of motor 102. The amount of offset provided by wheel hub 112 will depend on the characteristics of motor 102; specifically, the amount of torque imparted by motor 102 through pivot point 106. Wheel hub 112 provides a mount point for the drive wheel, and may be configured with respect to the drive wheel selected for system 100. In some embodiments, wheel hub 112 may accommodate a plurality of drive wheels.

Turning to Fig. 2, the components of an example final drive 200 are depicted. Final drive 200, in embodiments, is disposed below a pivot point 201 that defines the steer axis 214. Steer axis 214 is the line about which the components of final drive 200 rotate. Passing through pivot point 201 is an input drive shaft 202, which may be coupled to a motor, such as motor 102, either directly or via a gear box, such as gear box 104. The input drive shaft 202 in turn is fixedly coupled to first gear 204, so that rotational motion imparted to input drive shaft 202 is imparted to first gear 204. First gear 204, in turn, meshes 206 with a second gear 208, so that rotational motion from first gear 204 is imparted to second gear 208. Second gear 208, in turn, is coupled to output shaft 210 so that rotational motion from second gear 208 is transmitted to output shaft 210. Finally, output shaft 210 provides a mount point for a drive wheel 212, so that rotational motion from the output shaft 210 is transmitted to the drive wheel 212. The drive wheel 212, in turn, contacts a surface to generate linear motion. Force from the linear motion generated by drive wheel 212 in turn is transmitted to final drive 200, which in turn transmits the linear motion to a vehicle frame via pivot point 201.

First gear 204 and second gear 208, in the depicted embodiment, define a final drive ratio of revolutions of input drive shaft 202 to output shaft 210. As depicted, the final drive ratio is determined by the size of first gear 204 relative to the size of second gear 208. Where first gear 204 is smaller than second gear 208, the drive ratio is positive. Where the first gear 204 is larger than second gear 208, the drive ratio is negative. Where first gear 204 and second gear 208 are of equal size, the drive ratio is neutral, e.g. 1:1. Where a final drive may be implemented using more than two gears, or using some means of power transmission that does not employ two gears, e.g. hydraulic displacement, the final drive ratio may be determined by the relative sizes of multiple gears, or by the workings of other power transmission means, e.g. fluid slip and/or pump displacement, etc. As will be understood, where the drive ratio is positive, e.g. multiple turns of input drive shaft 202 are required for one turn of output shaft 210, the torque supplied to input drive shaft 202 will be multiplied to output shaft 210. Conversely, where the drive ratio is negative, the torque supplied to input drive shaft 202 will be reduced to output shaft 210, but with an increase of revolutions of output shaft 210 relative to input drive shaft 202. The ratio of first gear 204 to second gear 208 may be selected with respect to the needs of a given implementation for which final drive 200 is employed.

First gear 204 and second gear 208, in the depicted embodiment, are bevel gears, with matching cog angles to create an appropriate mesh 206. In embodiments, the pitch and profile of the each of the teeth or cogs on the first gear 204 and second gear 208 may match, to ensure that first gear 204 and second gear 208 mesh correctly. First gear 204 and second gear 208 may be sized and positioned to ensure an appropriate mesh 206. The mesh 206 may include any necessary backlash to provide for proper power transfer, desirable wear characteristics, and suitably low noise. In other embodiments, first gear 204 and second gear 208 may be implemented as a different type of gear set, e.g. hypoid, helical, worm drive, etc. First gear 204 and second gear 208 may be manufactured from any suitable material capable of withstanding the power exerted by the motor and load imposed during operation of any vehicle to which final drive 200 is equipped. Such materials may include, e.g., metal, plastic, wood, composites, or another suitable material. First gear 204 and second gear 208 may be manufactured from the same or from different materials.

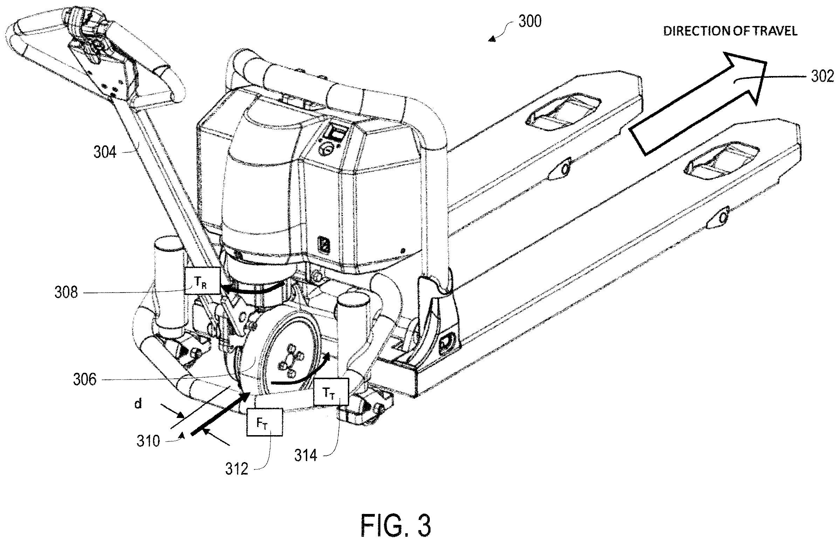

As seen in Fig. 2, pivot point 201 defines a vertical steer axis 214, about which final drive 200 rotates. Rotating final drive 200 causes drive wheel 212 to rotate about steer axis 214. Drive wheel 212 defines a center line 216, which corresponds to the plane of rotation of drive wheel 212 when powered via output shaft 210. As drive wheel 212 rotates about steer axis 214, the plane of rotation of drive wheel 212 likewise rotates, causing motion generated by the interaction of drive wheel 212 with a contact surface (such as the ground) to be directed in a desired direction, determined by operator movement of a tiller attached to final drive 200. The length of output shaft 210 determines an offset distance *d*, defined as the distance between steer axis 214 and drive wheel center line 216. This offset distance *d*, as will be explained further below with respect to Fig. 3, acts as a lever to cause motion from drive wheel 212 to generate a torque that is transmitted to an attached tiller, back through pivot point 201.

As will be understood, in embodiments drive wheel 212 includes a diameter that contributes to the amount of torque generated by drive wheel 212 and transmitted back through pivot point 201. The larger the diameter of drive wheel 212, the greater amount of linear motion that will be generated, and hence the greater the amount of torque generated for a given offset distance *d*. Drive wheel 212 may be a single wheel or a compound wheel. Drive wheel 212 may be manufactured from any material suitable for an intended use of a vehicle to which final drive 200 is attached. Drive wheel 212 may include a tire or other outer surface that enhances traction against the ground or surface over which drive wheel 212 will operate.

Fig. 3 depicts an example pallet truck that is equipped with a drive system similar to drive system 100 and final drive 200, described above. Pallet truck 300 is configured to move along a longitudinal axis 302, which as can be seen is along the direction of the fork tines. Pallet truck 300, in the depicted embodiment, is equipped with a tiller 304, which is coupled to drive wheel 306. As described above with respect to final drive 200, rotation of tiller 304 causes drive wheel 306 to rotate with tiller 304, changing the direction that drive wheel 306 imparts motion and allowing pallet truck 300 to be steered left or right. Drive wheel 306, as will be understood, receives power from a motor attached to a drive system and final drive, such as system 100 and final drive 200. The drive motor, including any attached gear box, such as drive motor 102 and gear box 104, produce an output torque which induces a torque reaction $T_R$ 308. This torque reaction 308, without compensation, would be passed through to tiller 304 and felt by an operator as a tendency to rotate. If not expected or compensated, it could result in the pallet truck 300 being directed in an undesirable direction.

This torque reaction 308 can be counteracted by careful selection of the offset $d$ 310, defined as the distance between the steer axis and drive wheel center line, also discussed above with respect to Fig. 2. Drive wheel 306, when in contact with the ground, generates a thrust force $F_T$ 312. This thrust force 312, because of the lever arm created by the offset 310, results in the drive wheel 306, when in motion, imparting a thrust torque $T_T$ 314. When properly selected, offset $d$ 310 will result in the thrust torque $T_T$ 314 equaling the torque reaction 308, but in the opposite rotational direction from torque reaction 308. The two opposing torques $T_R$ and $T_T$ thus cancel each other out, resulting in no torque steer being transmitted to or experienced by an operator of pallet truck 300. The offset 310 can be provided by extension of the output shaft from the final drive, such as output shaft 210.

The proper distance for offset $d$ 310 can be determined based on a torque $T$ of the motor, such as motor 102, a gear box ratio $n_g$, such as the ratio of gear box 104, a final drive ratio $n_{fd}$, such as the ratio between first gear 204 and second gear 208, and the radius $r$ of the drive wheel 306 (or diameter divided by two). The torque reaction $T_R$ can be computed by:

$$T_R = T * n_g \qquad\qquad (1)$$

The thrust torque $T_T$ can be computed by:

$$T_T = ((T * n_g * n_{fd})/r) * d \qquad\qquad (2)$$

As $T_R = T_T$ for zero torque steer, equation (1) can be placed into equation (2), to yield the following:

$$T * n_g = ((T * n_g * n_{fd})/r) * d \qquad\qquad (3)$$

Cancelling terms, this results in a final equation that yields the offset distance d:

$$d = r / n_{fd} \qquad\qquad (4)$$

Thus, the proper distance $d$ 310 is equal to the radius of the selected drive wheel divided by the ratio of the final drive, which is determined by the ratio of the first gear to second gear, such as first gear 204 and second gear 208. By selecting a length for the output shaft, such as output shaft 210, that results in the computed offset distance $d$, the resulting drive will yield a torque that cancels the motor torque, and result in minimal to no torque steer being experienced by an operator of pallet truck 300.

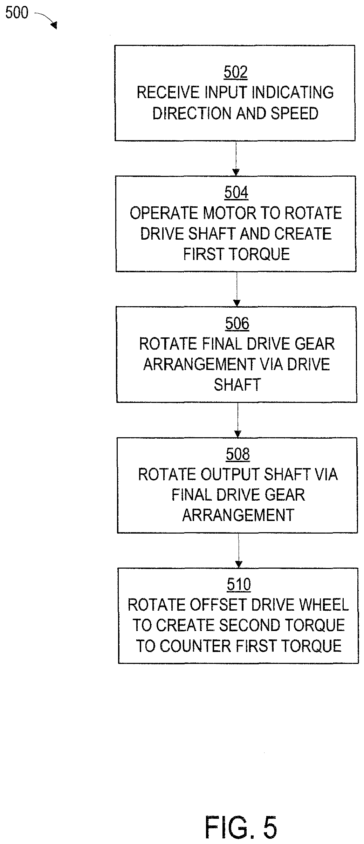

Fig. 5 is a method 500 for driving a pallet truck or other suitable vehicle through a final drive to counteract torque steer. Method 500 and/or its constituent operations may be performed in whole or in part, and may be performed using a final drive arrangement similar to the embodiments depicted in Figs. 1A, 1B, and 2. In operation 502, an input indicating a direction and speed is first received by a vehicle. Direction and speed input may be received via operator controls, such as a throttle that may be moved in a first direction with a magnitude to command a desired speed in a first direction, or may be moved in a second direction with a magnitude to command a desired speed in a second direction. Optionally, a gear selector or direction switch, such as a forward-neutral-reverse (FNR) switch, may be used to command a direction of operation, e.g. forward or reverse motion, and a separate throttle may be used to command a magnitude. This input may be supplied to a controller, as may be understood, coupled to a drive motor to command the drive motor at the desired speed and direction. Such a controller may be a vehicle systems controller, a microcontroller, a programmable computer, discrete circuitry, or some other suitable control means or combination of the foregoing, appropriate to a given vehicle embodiment.

In operation 504, in response to receiving the input indicating a direction and speed, a motor on the vehicle is operated to rotate a drive shaft, also creating a first torque having a magnitude and a rotational direction. For example, where the motor is electric, the input may be interpreted by a controller that either includes or is coupled to an electronic speed controller. The electronic speed controller may be commanded to generate a suitable electrical signal to drive the motor to the desired speed and rotational direction, e.g. clockwise or counter-clockwise. As will be understood, the motor generates torque as it rotates to its commanded speed, and this torque is harnessed through a drive shaft driven by the motor to propel the vehicle. As explained above, the generation of torque to drive the vehicle also results in generation of a first torque in an opposite rotational direction, but of a similar level of power. This opposite torque is transmitted through the motor frame or mount point. When the motor turning the drive shaft is mounted to the vehicle tiller or steering mechanism, this opposite torque transmitted through the motor frame is transferred to the tiller or steering mechanism, potentially inducing torque steer.

In operation 506, a final drive gear arrangement is rotated in response to rotating the drive shaft. In embodiments, the final drive gear arrangement is rotated by coupling the drive shaft to a first gear in the final drive gear arrangement. As discussed above, this drive shaft, and thus the first gear, may be directly driven by the motor. In some such embodiments, the drive shaft may be the motor drive shaft, directly secured to or part of the motor's rotor. In other embodiments, the drive shaft may be driven by the motor through a reduction gear box or other transmission suitable to a given embodiment prior to imparting rotational force to the final drive gear arrangement.

In operation 508, an output shaft is next rotated in response to rotating the final drive gear arrangement. In embodiments, this output shaft is rotated by a second gear in the final drive gear arrangement that is directly coupled to the output shaft. This second gear may be directly meshed to the first gear and, in some embodiments, may be arranged orthogonal to the first drive gear. In such embodiments, the first and second drive gears may be bevel gears, and may be equipped with straight or helical-cut cogs. In other embodiments, the first gear may drive the second gear in the final drive gear arrangement by one or more intervening structures, such as other gears.

In operation 510, a drive wheel is rotated about a drive wheel centerline that lies in a plane of rotation of the drive wheel in response to rotating the output shaft. One such possible arrangement is depicted in Fig. 3. The drive wheel may be coupled to the output shaft so as to receive rotation from the final drive gear arrangement. As discussed above, the drive wheel centerline is offset from the steer axis by a distance appropriate to create a second torque equal in magnitude to the first torque but acting in an opposite rotational direction from the first torque. The equations discussed above with respect to Fig. 3 may be employed to compute this offset distance. As the first torque is the torque imparted by the motor through its frame in opposition to the torque generated and transmitted through the drive shaft, it is this first torque that results in torque steer, and is counteracted by the second torque, to mitigate or otherwise eliminate the torque steer induced by the first torque.

It will be apparent to those skilled in the art that various modifications and variations can be made in the disclosed embodiments of the disclosed device and associated methods without departing from the spirit or scope of the disclosure. Thus, it is intended that the present disclosure covers the modifications and variations of the embodiments disclosed above provided that the modifications and variations come within the scope of any claims and their equivalents.

## Claims

1.  A drive system for a vehicle, comprising:

    a first gear configured to receive rotational motion;
    a second gear coupled to the first gear so as to receive rotational motion from the first gear; and
    a drive wheel coupled to and offset from the second gear,
    wherein the drive wheel is offset a distance from a steering axis and oriented such that, when in motion and in contact with a surface, the drive wheel imparts a torque that counteracts a torque imparted through the first gear.

2.  The drive system of claim 1, further comprising a drive motor coupled to the first gear.

3.  The drive system of claim 2, wherein the drive motor is directly coupled to the first gear.

4.  The drive system of claim 2, wherein the drive motor is coupled to the first gear through a reduction gear box, the reduction gear box configured to reduce the drive motor rotational speed provided to the first gear.

5.  The drive system of claim 2, wherein the drive system is configured to pivot about the steering axis.

6.  The drive system of claim 1, wherein the first gear and second gear are disposed orthogonal to each other.

7.  The drive system of claim 6, wherein the first gear and second gear are bevel gears, each with a plurality of teeth, and the teeth of the first gear are enmeshed with the teeth of the second gear.

8.  The drive system of claim 1, wherein the drive wheel is offset a distance calculated with the formula $d = r/n_{fd}$, where $d$ is the offset distance, r is a drive wheel radius, and $n_{fd}$ is a final drive ratio defined by size of the first gear relative to the size of the second gear.

9. The drive system of claim 1, wherein the vehicle comprises a pallet truck defining a longitudinal centerline, and the drive system further comprises a drive motor positioned orthogonal to the drive wheel and parallel to the steering axis of the pallet truck, the steering axis perpendicular to the longitudinal centerline; and wherein:

the first gear is coupled to the drive motor such that the first gear receives torque from the drive motor to create the torque imparted through the first gear,
the drive wheel is positioned to drive the pallet truck along the longitudinal center line of the pallet truck, and
the drive wheel is offset from the steer axis by a distance such that the drive wheel imparts a torque when in motion that counteracts the torque imparted through the first gear from the drive motor.

10. The pallet truck of claim 9, wherein:

the first gear comprises a first bevel gear; and
the second gear comprises a second bevel gear disposed orthogonal to and enmeshed with the first bevel gear.

11. The pallet truck of claim 9, wherein the drive wheel is disposed about the longitudinal centerline.

12. The pallet truck of claim 9, further comprising a tiller configured to rotate about the steering axis, wherein the drive motor, the first gear, and the second gear are coupled to the tiller.

13. The pallet truck of claim 9, wherein the drive motor is directly coupled to the first gear.

14. The pallet truck of claim 9, wherein the drive motor is coupled to the first gear through a reduction gear box, the reduction gear box configured to reduce the drive motor rotational speed provided to the first gear.

15. The pallet truck of claim 9, wherein the drive wheel is offset a distance calculated with the formula $d = r/n_{fd}$, where $d$ is the offset distance, $r$ is a drive wheel radius, and $n_{fd}$ is a final drive ratio defined by size of the first gear relative to the size of the second gear.

16. A method of operating a vehicle comprising:

receiving, by the vehicle, an input indicating a direction and speed;
in response to receiving the input indicating a direction and speed, operating, via the vehicle, a motor to rotate a drive shaft thus creating a first torque having a magnitude and a rotational direction;
rotating a final drive gear arrangement in response to rotating the drive shaft;
rotating an output shaft in response to rotating the final drive gear arrangement; and
rotating a drive wheel about a drive wheel centerline that lies in a plane of rotation of the drive wheel in response to rotating the output shaft, wherein the drive wheel centerline is offset from the steer axis by a distance thus creating a second torque equal in magnitude to the first torque but acting in an opposite rotational direction from the first torque.

FIG. 1B

FIG. 1A

FIG. 2

DIRECTION OF TRAVEL

302

300

304

$T_R$

308

306

d

310

312

$F_T$

314

$T_T$

FIG. 3

400

402

404

FIG. 4
PRIOR ART

500

```
┌──────────────────────────────┐
│            502               │
│  RECEIVE INPUT INDICATING     │
│    DIRECTION AND SPEED        │
└──────────────────────────────┘
              │
              ▼
┌──────────────────────────────┐
│            504               │
│  OPERATE MOTOR TO ROTATE      │
│  DRIVE SHAFT AND CREATE       │
│       FIRST TORQUE            │
└──────────────────────────────┘
              │
              ▼
┌──────────────────────────────┐
│            506               │
│  ROTATE FINAL DRIVE GEAR      │
│  ARRANGEMENT VIA DRIVE        │
│         SHAFT                 │
└──────────────────────────────┘
              │
              ▼
┌──────────────────────────────┐
│            508               │
│  ROTATE OUTPUT SHAFT VIA      │
│    FINAL DRIVE GEAR           │
│      ARRANGEMENT             │
└──────────────────────────────┘
              │
              ▼
┌──────────────────────────────┐
│            510               │
│  ROTATE OFFSET DRIVE WHEEL    │
│  TO CREATE SECOND TORQUE      │
│  TO COUNTER FIRST TORQUE      │
└──────────────────────────────┘
```

# FIG. 5

Europäisches
Patentamt

European
Patent Office

Office européen
des brevets

# EUROPEAN SEARCH REPORT

**Application Number**

EP 19 19 4072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/214686 A1 (UNIV SYDNEY [AU]) 21 December 2017 (2017-12-21) | 1-8,16 | INV. B60K7/00 |
| Y | * paragraphs [0103] - [0139], [0147]; figures 1-5 * | 9-15 | |
| X | GB 2 260 108 A (VINTEN GROUP PLC [GB]) 7 April 1993 (1993-04-07) | 1-8,16 | |
| Y | * page 4, line 25 - page 5, line 25; figure 1 * | 9-15 | |
| X | AU 2012 216 299 A1 (CALLEIJA MARK STEPHEN [AU]) 21 March 2013 (2013-03-21) * the whole document * | 1-7,9-16 | |
| Y | GB 2 531 778 A (COMBILIFT [IE]) 4 May 2016 (2016-05-04) * figures * | 9-15 | |

**TECHNICAL FIELDS SEARCHED (IPC)**

B60K
B60B
B62D
F16H
B66F
F16M

The present search report has been drawn up for all claims

| Place of search | Date of completion of the search | Examiner |
|---|---|---|
| Munich | 12 March 2020 | Rinchard, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 19 4072

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2020

| Patent document cited in search report | | Publication date | Patent family member(s) | | | Publication date |
|---|---|---|---|---|---|---|
| WO 2017214686 | A1 | 21-12-2017 | AU | 2017285709 | A1 | 17-01-2019 |
| | | | BR | 112018076116 | A2 | 26-03-2019 |
| | | | CA | 3027794 | A1 | 21-12-2017 |
| | | | CL | 2018003646 | A1 | 03-05-2019 |
| | | | CN | 109689480 | A | 26-04-2019 |
| | | | EP | 3472025 | A1 | 24-04-2019 |
| | | | PH | 12018502651 | A1 | 07-10-2019 |
| | | | US | 2019248233 | A1 | 15-08-2019 |
| | | | WO | 2017214686 | A1 | 21-12-2017 |
| GB 2260108 | A | 07-04-1993 | NONE | | | |
| AU 2012216299 | A1 | 21-03-2013 | NONE | | | |
| GB 2531778 | A | 04-05-2016 | AU | 2015340664 | A1 | 25-05-2017 |
| | | | BR | 112017008775 | A2 | 02-01-2018 |
| | | | CA | 2966245 | A1 | 06-05-2016 |
| | | | CN | 107074264 | A | 18-08-2017 |
| | | | EP | 3233711 | A1 | 25-10-2017 |
| | | | ES | 2708326 | T3 | 09-04-2019 |
| | | | GB | 2531778 | A | 04-05-2016 |
| | | | PL | 3233711 | T3 | 28-06-2019 |
| | | | TR | 201901278 | T4 | 21-02-2019 |
| | | | US | 2017334695 | A1 | 23-11-2017 |
| | | | WO | 2016066658 | A1 | 06-05-2016 |

EPO FORM P0459

For more details about this annex : see Official Journal of the European Patent Office, No. 12/82